# FASCICULE DE BREVET EUROPEEN

(11) **EP 2 327 236 B1**
(45) Date de publication et mention de la délivrance du brevet: **28.11.2018**
(21) Numéro de dépôt: 09736435.0
(22) Date de dépôt: 28.08.2009
(51) Int. Cl.: H04W 4/18, H04W 4/14, H04L 12/24, H04W 88/18, H04L 29/08

(54) **CENTRE USSD GÉNÉRIQUE D'APPLICATIONS ET DE SERVICES RÉSEAUX**
GENERISCHES USSD-CENTER FÜR NETZWERKANWENDUNGEN UND DIENSTE
GENERIC USSD CENTRE FOR NETWORK APPLICATIONS AND SERVICES

(30) Priorité: 02.09.2008 FR 0804815
(43) Date de publication de la demande: 01.06.2011
(73) Titulaire: Opencode Systems O.O.D., 1612 Sofia (BG)
(72) Inventeur: STAYKOFF, Constantin, F-75008 Paris (FR)
(86) Numéro de dépôt international: PCT/FR2009/001045
(87) Numéro de publication internationale: WO 2010/026306

(56) Documents cités:
- ANONYMOUS: "Redefining over-the-phone customer service" INTERNET ARTICLE, [Online] 31 mars 2008 (2008-03-31), XP002528244 Extrait de l'Internet: URL:http://www.voiceobjects.com/files/en/v oiceobjects_7_product_brief_en.pdf> [extrait le 2009-05-11]
- ANONYMOUS: "USSD Services for Interactive Mobile Users - Building User-Friendly Mobile Telephony Applications Using Dialogic Distributed Signaling Interface Components" INTERNET ARTICLE, [Online] 31 août 2008 (2008-08-31), XP002528245 Extrait de l'Internet: URL:http://www.dialogic.com/products/docs/ appnotes/11038_USSD_an.pdf> [extrait le 2008-05-11]
- THE MORIANA GROUP: "Service Delivery Platforms And Telecom Web Services - An Industry Wide Perspective" [Online] 30 juin 2004 (2004-06-30), MAC TAYLOR , XP002528246 Extrait de l'Internet: URL:http://www.morianagroup.com/> [extrait le 2009-05-12] pages 100-103 pages 164-174

## Description

La présente invention concerne un CENTRE USSD générique d'applications et de services réseaux.

La présente invention est située dans le domaine des applications conversationnelles et des applications client-serveur, plus particulièrement dans le domaine des dialogues dynamiques entre un terminal et un serveur d'applications et de services, à l'aide d'interfaces interactives, offrant la possibilité d'accéder, de dialoguer, d'échanger des informations et d'utiliser différents applications et services.

La présente invention est située notamment dans le secteur de la téléphonie mobile, dans un contexte d'expansion de nouvelles fonctionnalités, de rajout de services interactifs, de convergence des moyens de dialogue et de communication entre dispositifs hétérogènes, tels que téléphones mobiles, équipements mobile, plateformes numériques d'applications et de services, serveurs Internet, services et équipements de tierce parties et autres.

Dans l'ère des nouvelles technologies émergentes, est présente une nécessité croissante de concevoir des systèmes d'applications et de services, notamment des serveurs génériques basés sur des protocoles simples d'implémentation et d'utilisation, avec des fonctionnalités de navigation dynamique, interactive, intuitive, facile d'utilisation et aussi, avec une intégration rapide. A ces caractéristiques se rajoutent les exigences de « scalabilité » (relatif au mot « scalability » en anglais, qui désigne la propriété de redimensionnement d'un système ou d'un procédé en terme respectivement de composants ou d'étapes, de qualité, de taille, de résolution, de bande passante ou autres). Cependant, la contrainte des coûts en ressources matérielles et humaines pour la mise en place de tels systèmes est importante. Le problème technique à résoudre est donc de concevoir un système d'applications et de services permettant avec les moindres coûts possibles, la mise en place d'applications et de services multiples et réutilisables, ciblant le marché de masse. Le problème est également de répondre à l'exigence croissante d'avoir des services compatibles interactifs entre les technologies existantes et émergentes, sans implémentations coûteuses concernant les systèmes d'applications et de services, et de préférence, avec peu ou sans modifications des équipements des opérateurs réseaux et des utilisateurs.

Afin de répondre à cette problématique, l'art antérieur connaît différentes approches, qui cependant n'abordent que des aspects restreints et ponctuels de cette problématique, rendant possible des applications concrètes, sans toutefois proposer des services complets tels que la navigation dans différents menus, issus d'applications diverses, à l'aide de moyens déjà disponibles dans les dispositifs, comme les fonctionnalités standards implémentés de manière native, et aussi sans modifications importantes des serveurs numériques ou des équipements des utilisateurs finaux.

Un document connu par l'art antérieur est le document FR2857816, qui concerne un procédé de mise en oeuvre d'une communication ayant un type appartenant au groupe constitué des communications de type vocale, WAP (« Wireless Application Protocol » en anglais, protocole d'application sans fil) ou MMS (« Multimedia Message Service » en anglais, service de message multimédia) sur un téléphone mobile. Dans le procédé de communication, une étape préliminaire consiste à offrir à l'utilisateur la possibilité d'activer ou non une telle communication. Le choix d'activer ou non une telle communication est offert à l'utilisateur par une connexion USSD (« Unstructured Supplementary Service Data », en anglais, service de données supplémentaire et non structuré).

Cependant, ce document est limité à l'établissement d'une connexion pour l'activation en USSD d'une communication vocale téléphonique, sans toutefois aborder des aspects d'architecture ou de mise en place pour la navigation et pour les services auxiliaires.

Un autre document bien connu par l'art antérieur est le document EP0986275 qui concerne un procédé de transaction, pour commander des articles de consommation ou des services avec un téléphone mobile, auquel cas un ordre de livraison est transféré à un prestataire de services sur un réseau de téléphonie mobile. Certaines données de commande, dans lesquelles une facturation est indiquée, sont encapsulées dans une ou plusieurs communications brèves de type SMS (« Short Message Service » en anglais, court message textuel pouvant être émis et reçu depuis un téléphone portable), de type USSD ou de type e-mail. Ces données sont transmises à une plate-forme de validation, liée à une centrale d'entreprise de communications de courte durée. Le coût du service indiqué est prélevé à partir d'un compte client et est transféré vers un compte de prestataire de services. Cependant, ce document concerne avant tout les aspects d'une transaction ponctuelle, basée sur des protocoles existants, sans cependant aborder la problématique des systèmes de navigation USSD interactive ou d'architecture pour un équipement USSD générique.

Une autre référence de l'art antérieur est le document FR2819675, concernant un téléphone portable qui comporte un navigateur pour un réseau informatique de type Internet, des moyens de capture d'adresses informatiques reçues par le navigateur, pour commander des moyens de mémorisation et de rappel des adresses informatiques prévus dans le téléphone. Le téléphone portable comporte aussi des moyens de génération et de présentation d'icônes électroniques, des moyens de sélection de ces icônes, des moyens de mémorisation des icônes et des moyens d'appariement pour apparier les icônes et des adresses informatiques rangées dans les moyens de mémorisation et de rappel.

Toutefois, ce document est relatif à un navigateur implémenté dans l'équipement de l'utilisateur et n'aborde donc pas les aspects relatifs à aux interpréteurs et aux navigateurs embarqués dans le réseau.

Un document également connu par l'art antérieur est le document WO/2007/030413, relatif à un canal de commande d'un navigateur VXML («Voice eXtended Markup Language » en anglais, langage vocal de marquage étendu, qui désigne une interface de programmation d'applications relative à la communication utilisant des périphériques liés à la synthèse vocale et la téléphonie). Ce document porte sur un système permettant à des applications extérieures d'interagir avec un navigateur VXML tournant sur un processeur à fonction d'interpréteur VXML. Une commande est fonctionnellement placée entre l'application extérieure et l'interpréteur VXML à l'aide d'un canal de communication. La commande insère dans l'interpréteur VXML les instructions qui sont traitées par le navigateur VXML de manière classique pour permettre à l'application extérieure d'interagir avec le navigateur VXML.

Cependant, ce document est limité à l'interprétation et aux fonctionnalités d'un navigateur VXML et de leur adaptation à un canal de transport avec des protocoles classiques comme UDP (« User Datagram Protocol » en anglais, protocole de communication assurant l'échange d'un minimum de données à travers un réseau), TCP (« Transmission Control Protocol », en anglais, protocole de base pour l'échange des données dans un réseau), ou SIP (« Session Initiation Protocol » en anglais, protocole standard d'initiation d'une session réseau interactive). Par conséquent, ce document ne résout pas le problème technique énoncé dans la présente invention, à savoir la navigation dans des services non-vocaux de type USSD ou autres, ainsi que toute la problématique liée à la spécificité de l'implémentation et de l'intégration de cette navigation.

Un autre document connu de l'art antérieur est le document "Redefining over-the-phone customer service", INTERNET ARTICLE, 31 mars 2008 (2008-03-31), XP002528244,Extrait de l'Internet: URL:http://www.voiceobjects.com/files/en/ voiceobjects_7_product_brief_en.pdf.

Ce document décrit le server d'application VoiceObjects permettant de fournir des services USSD aux utilisateurs d'un réseau mobile.

La présente invention s'appuie sur des standards et des protocoles existants, ouverts et implémentés déjà sur des dispositifs, donc déjà disponibles. Elle s'appuie sur des fonctionnalités natives réseaux et terminaux en proposant une architecture générique, multi-applications et multiservices. De plus, l'implémentation et l'intégration centralisées côté réseaux permettent une gestion optimale des ressources du réseau et des efforts de mise en oeuvre.

La présente invention a pour but de pallier à l'insuffisance de l'art antérieur et résout le problème technique énoncé à l'aide d'un procédé unique et d'un système générique d'applications et de services multiples pour la mise en oeuvre de ce procédé, basé sur l'utilisation et l'adaptation de protocoles réseaux de type USSD avec des interpréteurs relatifs à des descripteurs de langages structurés.

La présente invention a pour objet un système d'applications et de services réseaux basé sur des protocoles réseaux standards de type USSD, comportant au moins un serveur d'applications et de services, incluant un navigateur dynamique interactif, basé sur un interpréteur de langage structuré par objets conversationnels, tel que par exemple VXML. Le système d'application et de services basé sur des protocoles USSD est centralisé dans un réseau de télécommunications ou informatique. Le navigateur basé sur un interpréteur VXML est intégré du côté réseau.

La présente invention concerne un système numérique de télécommunications selon la revendication 1.

Les modes de réalisation particuliers sont décrits dans les revendications dépendantes.

Dans son acception la plus générale, la présente invention concerne un système numérique de télécommunications pour l'accès, la navigation et l'utilisation d'applications et de services numériques, appelé CENTRE USSD, qui comporte au moins un module serveur d'applications et de services, au moins un module passerelle d'accès, au moins un module passerelle de réseaux, au moins un module passerelle d'intégration, et au moins un module base de données et de profilage, ledit module serveur d'applications et de services, appelé Browser, étant basé sur au moins un protocole de télécommunications USSD et sur au moins un module interpréteur de langages structurés par objets, relatif à des descripteurs structurés par objets.
- ledit interpréteur de langage est de type VXML ;
- le module passerelle d'accès est basé sur au moins un protocole USSD.

Dans une variante, le système est connecté à moins un module de type SMSC.

Dans une autre variante, le système est connecté à au moins un module de type passerelle WAP et/ou OTA et/ou IVR et/ou GPRS pour un réseau quelconque de télécommunications. Avantageusement, le système est connecté à moins un module de type applications SMS.
- le système est connecté à au moins un réseau de type coeur de réseau pour télécommunications mobiles ;
- le coeur de réseau est connecté à au moins un réseau d'utilisateurs.

Avantageusement, le système est connecté à au moins un ensemble de réseaux basé sur des protocoles de communication et des interfaces standards ou propriétaires.

Dans une variante, le système est relié à au moins un module de services des opérateurs de télécommunications ou de tierces parties.

Dans une autre variante, le système est relié à au moins un module de systèmes dits réseaux intelligents et de support business.

Avantageusement, au moins un module serveur d'applications et de services ou au moins un module passerelle d'accès ou au moins un module passerelle de réseaux ou au moins un module passerelle d'intégration ou au moins un module base de données et de profilage est autosuffisant.

Le serveur d'application et de services comporte au moins un interpréteur VXML, au moins un module de services USSD et au moins un module de fichiers VXML. Dans exemple de réalisation, le module de services USSD contient des services USSD non structurés ou structurés en menus, lesdits services USSD étant interactifs ou non interactifs.

Dans un autre exemple de réalisation, lesdits services sont multilingues pour toute la chaîne de bout en bout.

Dans un exemple de réalisation préféré, la logique du service est indépendante des langues des services pour toute la chaîne de bout en bout.

De préférence, ledit CENTRE USSD, comporte au moins un module de tarification, et/ou au moins un module de facturation, et/ou au moins un module d'observation et de classement.

Dans un premier mode de mise en oeuvre préféré, le CENTRE USSD est un système de navigation réseau.

Dans un deuxième mode de mise en oeuvre préféré, le CENTRE USSD est un système d'hébergement d'applications et de services tierces.

Dans un troisième mode de mise en oeuvre préféré, le CENTRE USSD est un système de type Proxy.

Dans un quatrième mode de mise en oeuvre préféré, le CENTRE USSD est un système de type routeur.

Dans un cinquième mode de mise en oeuvre préféré, le CENTRE USSD est un système de diffusion de type Broadcast. Avantageusement, un module d'administration comprend une administration système de type WEB incluant un environnement de création de services, de test, de déploiement et de gestion de versions de ces services, un module de contrôle du CENTRE USSD et des modules de configurations des fonctionnalités, des paramètres et des passerelles réseaux.

La présente spécification décrit également un procédé qui est effectué en une étape d'allocation des codes des services USSD ou génériques, une étape de création d'une logique des services, une étape de test, d'évaluation et de mise en version des services, et une étape d'activation, de déploiement, d'usage et de sauvegarde des services.

Dans un mode de mise en oeuvre, ce procédé comporte une étape supplémentaire de tarification en temps réel ou différé.

Dans un autre mode de mise en oeuvre, le procédé comporte aussi une étape supplémentaire de facturation en temps réel ou différé.

Avantageusement, le procédé comporte une étape d'unification convergente des modes de payement pour tout type d'utilisateurs (mode abonné, mode prépayé, mode tierce partie) d'au moins un réseau de télécommunication.

De préférence, le procédé comporte une étape supplémentaire d'observation et de classement en temps réel ou différé.

Dans une variante, le procédé comporte une étape supplémentaire de diffusion de données et de services de type Broadcast. Avantageusement, l'étape de diffusion Broadcast est suivie d'une étape d'échange interactif ou non interactif avec l'utilisateur.

Dans un exemple de réalisation, le procédé comporte une étape supplémentaire d'abonnement et/ou de désabonnement pour au moins une application tierce.

Dans un autre exemple de réalisation, le procédé effectue la différenciation des utilisateurs, les utilisateurs étant des abonnés et/ou des tierces applications ou services, en temps réel à l'aide d'une customisation dynamique.

Dans un exemple de réalisation préféré, les utilisateurs étant des abonnés et/ou des tierces applications ou services gèrent eux-mêmes leur environnement de création de services, d'applications et de contenus.

Avantageusement, ledit environnement de création est accessible localement, à distance ou depuis un terminal par l'opérateur et/ou les tierces parties et/ou les abonnés eux-mêmes.

Dans un premier mode de réalisation, le procédé définit au moins un profil d'au moins un utilisateur et/ou d'au moins un service.

Dans un deuxième mode de réalisation, le procédé effectue une détection du comportement de l'utilisateur et génère des fonctionnalités d'assistance et/ou d'auto-apprentissage.

Dans un premier mode de mise en oeuvre particulier, l'utilisateur accède aux services USSD via des services non-USSD existants ou nouveaux.

Dans un deuxième mode de mise en oeuvre particulier, l'utilisateur accède à des services non-USSD, existants ou nouveaux, via des services USSD existants ou nouveaux.

Dans un troisième mode de mise en oeuvre particulier, l'utilisateur accède à des services USSD, existants ou nouveaux, via des services USSD existants ou nouveaux.

Dans un quatrième mode de mise en oeuvre particulier, l'utilisateur accède à des services non-USSD, existants ou nouveaux, via des services non-USSD existants ou nouveaux. Avantageusement, plusieurs codes d'accès USSD existants sont regroupés en un seul code d'accès USSD.

Dans une variante, le procédé comprend une étape de modifications statiques ou/et dynamiques des paramètres commutés.

Dans un autre variante, le procédé comprend une étape de partage de charge.

De préférence, la navigation USSD effectue l'approvisionnement, la consultation et la modification d'au moins une information gérée dans le coeur d'un réseau.

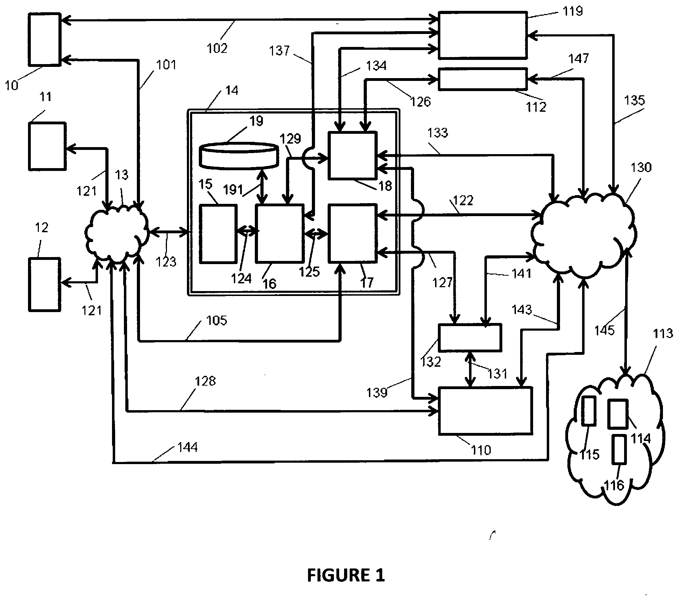

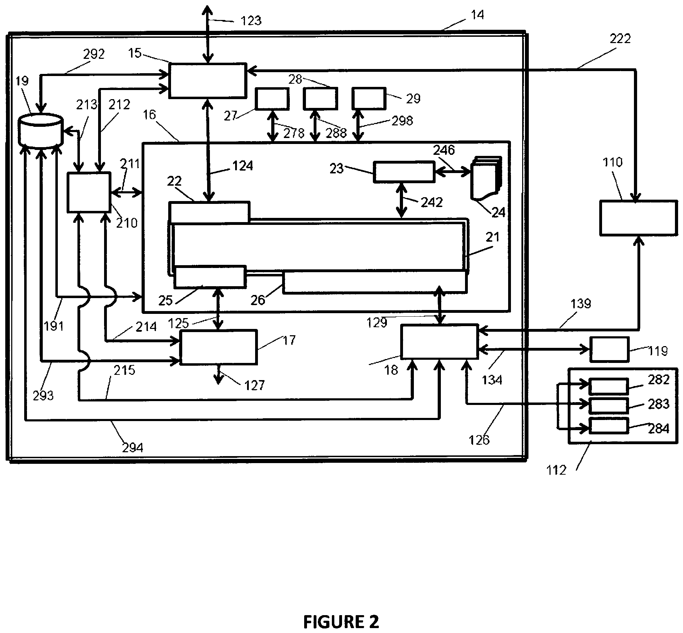

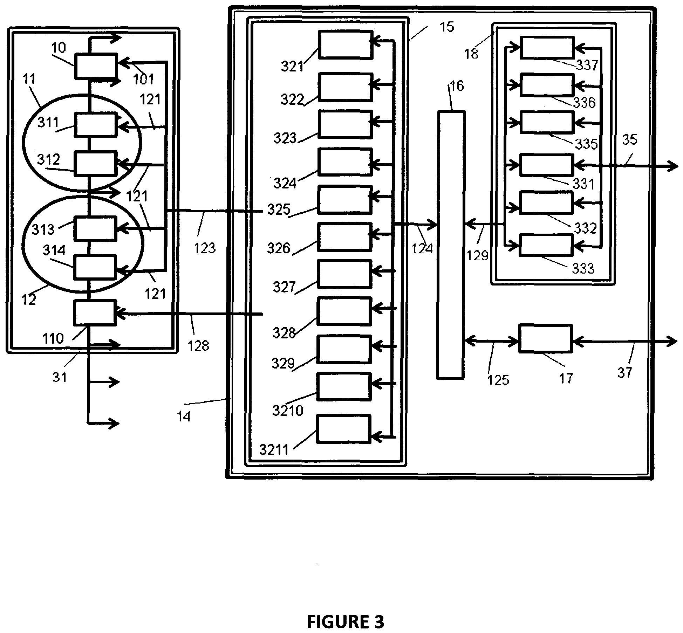

La présente invention sera mieux comprise à l'aide des figures en référence aux dessins annexés qui représentent respectivement :
- en figure 1, un schéma général d'architecture du système générique, objet de la présente invention ;
- en figure 2, un mode particulier de réalisation du CENTRE USSD (14) et du module (16) avec ses connexions internes ;
- en figure 3, un mode particulier de réalisation du CENTRE USSD (14) avec des connexions externes au module (16) .

Le schéma général de la présente invention est illustré sur la figure 1. Une plateforme d'applications et de services (14), appelée dans la présente invention « CENTRE d'applications et de services » ou encore « CENTRE», est conçue pour effectuer et facturer des services, par exemple de type messagerie (USSD ou SMS « Short Message Service» en anglais, service de message court, ou autre), de type « Browsing » en langue anglaise, c'est-à-dire navigation, de type « Hosting » en langue anglaise, c'est-à-dire hébergement et de type « Broadcast » en langue anglaise, c'est-à-dire diffusion de données à partir d'une source unique vers un ensemble de récepteurs. Le CENTRE (14) est un système générique multi-applications et multiservices ouvert, qui fournit des services compatibles avec des protocoles standards, utilisés dans la téléphonie mobile, tels que par exemple les protocoles SS7 (« Signaling System 7 » en anglais, protocole de télécommunications pour les connexions haut débit en mode circuit) et/ou les protocoles IP (« Internet Protocol » en anglais, protocole Internet). Dans la présente invention, sous le terme « système générique » USSD est entendu un système basé sur des protocoles standards, existants ou nouveaux, permettant la mise en place par USSD de tout service et de toute application existante ou nouvelle. Ledit CENTRE (14) est situé au sein d'un serveur dans un réseau de type par exemple de télécommunications mobiles, réseau SS7, réseau 3G/3G+, réseau NGN (« Next Génération Networks » en anglais, nom générique d'un quelconque réseau de télécommunications futur), réseau informatique Internet ou tout autre réseau numérique. Ce CENTRE (14) est constitué de cinq modules principaux : un serveur d'applications et de services (16) avec un navigateur, appelé dans la présente invention « Browser » (« Browser » en anglais, navigateur), ledit Browser étant basé sur au moins un protocole USSD, une passerelle d'accès (17) USSD, une passerelle de réseaux (18) basée sur des protocoles compatibles avec les réseaux de télécommunications, une passerelle (15) d'intégration, dédiée à des systèmes de technologie de l'information et une base de données et de profilage (19).

Dans un cas général, ledit CENTRE (14) est constitué d'au moins un serveur d'applications et de services (16), d'au moins une passerelle d'accès (17), d'au moins une passerelle de réseaux (18), d'au moins une passerelle (15) d'intégration et d'au moins une base de données et de profilage (19).

Dans un premier cas particulier, ledit CENTRE est constitué d'un sous ensemble des modules (16), (17), (18), (15) ou (19) .

Dans un deuxième cas particulier, au moins un module (16) ou au moins un module (17) ou au moins un module (18) ou au moins un module (15) ou au moins un module (19) est autosuffisant.

Dans la présente invention est entendu qu'une passerelle de réseaux représente une plateforme ou un ensemble de plateformes intermédiaires qui traite et qui transmet des paquets d'informations sur un réseau ou sur plusieurs réseaux vers la destination indiquée, et permet de faire communiquer des réseaux hétérogènes. Sous le terme «passerelle » est comprise donc une passerelle réseaux pour un réseau quelconque, comprenant au moins un interface de réseau.

La passerelle d'intégration (15) communique avec le serveur d'applications et de services réseaux (16), ledit Browser, via le lien (124) et à l'aide d'au moins un protocole d'interfaçage, par exemple un protocole standard IP. Sous protocole standard IP est compris l'ensemble des protocoles IP utilisés dans les réseaux. Le Browser (16) communique avec la passerelle d'accès USSD (17) via le lien (125) et à l'aide de protocoles de type IP par exemple ou avec un protocole d'applications SMS, tel que SMPP («Short Message Peer to Peer » en anglais). Le Browser (16) communique également avec la passerelle de réseaux (18) via le lien (129), à l'aide de protocoles de type IP par exemple. Le Browser (16) échange des données avec la base de données et de profilage (19) via le lien (191) à l'aide de protocoles de type IP. Ladite base de données et de profilage(19) contient des informations, par exemple sur des listes blanches et des listes noires concernant des utilisateurs diverses, sur les profils des utilisateurs, sur les profils des services et sur des statistiques diverses d'usage utilisées dans l'analyse et la gestion des services. Le module (19) comporte également des modules de définition statique ou dynamique d'au moins un profil d'utilisateur et d'au moins un profil de service.

Par la suite, ledit CENTRE (14) ainsi mis en oeuvre est appelé CENTRE USSD (14).

Le CENTRE USSD (14) est connecté à travers la passerelle USSD (17) à un réseau de type « Core Network » (130) (« Core Network » en anglais, réseau central de base ou coeur de réseau de télécommunications). Le Core Network est par exemple de type coeur de réseau GSM (« Global System for Mobile » en anglais, système global de télécommunications pour la téléphonie mobile), GPRS (« General Packet Services » en anglais, système de télécommunications par accès avec services par paquets), UMTS (« Universal Mobile Télécommunications System » en anglais, système de télécommunications mobiles universelles), 3G/3G+ et/ou tout autre coeur de réseau de type NGN. Par exemple, le réseau (130) est de type SS7 et communique avec le CENTRE USSD (14) via le lien (122) par lequel les communications sont échangées par exemple à l'aide du protocole MAP (« Mobile Application Protocol» en anglais, protocole pour applications mobiles).

Dans une autre variante, le CENTRE USSD (14) est relié au réseau (130) à travers la passerelle de réseau (18), via un lien (133) et un ou plusieurs protocoles de type SS7. Par exemple, ledit lien (133) est constitué par un protocole CAP (« CAMEL Application Part » en anglais, partie applicative du protocole CAMEL « Customised Applications for Mobile network Enhanced Logic » en anglais, permet à un opérateur télécom de fournir, à l'intérieur ou en dehors de son propre réseau, des services particuliers à ses utilisateurs, telle que la facturation en temps réel), par un protocole INAP (« Intelligent Network Application Protocol », partie applicative pour des applications intelligentes sur protocole SS7) ou bien par un protocole MAP.

Ledit coeur de réseau (130) comporte différents modules, avec lesquels la passerelle de réseau (18) et/ou la passerelle USSD (17) échangent des données. Par exemple, ces modules sont de type module HLR (« Home Location Register » en anglais, enregistreur de localisations domestiques), module MSC (« Mobile Switch Center » en anglais, centre de communications mobiles), module VMSC (« Visited Mobile Switching Center » en anglais, centre de services mobiles visité), module GMSC («Gateway Mobile Services Switching Center » en anglais, passerelle de services mobiles commutés), module SIGTRAN (ensemble de protocoles définis pour transporter des messages SS7 sur IP) ou autre module quelconque, relatif à la téléphonie mobile.

Ledit coeur de réseau (130) échange des informations via le lien (145), avec l'ensemble (113) des utilisateurs (114), (115), et/ou (116). L'ensemble (113) est par exemple un réseau de type RAN (« Radio Access Network » en anglais, réseau d'accès radio pour la téléphonie mobile) pour GSM, EDGE, UMTS, 3G/3G+ ou bien par exemple de type PSTN (« Public Switched Telephone Network » en anglais, réseau publique commuté de télécommunications), NGN, ou d'un autre type quelconque de réseau numérique d'un ensemble d'utilisateurs. Le lien de communication (145) est établi à l'aide de protocoles standards.

L'équipement de l'utilisateur, ledit terminal, est par exemple un téléphone mobile (dit encore téléphone portable), un PDAs, («Personal Digital Assistant » en anglais, ordinateur de poche, cumulant de nombreuses fonctions), un ordinateur multifonctions de bord ou de véhicule, une plateforme multifonctions domestique ou d'entreprise, comprenant par exemple une fonction de surveillance ou de sécurité, ou tout autre dispositif fixe ou mobile pouvant communiquer avec au moins un réseau.

Dans la présente invention, sous le terme « utilisateur » est entendu une personne physique abonnée, fixe, nomade ou « Roamer » (« roamer » en anglais, personne itinérante dans le sens de « Roaming » en anglais, itinérance inter-réseaux) à au moins un réseau, ou une tierce partie, par exemple un fournisseur d'applications, de services, de contenus ou d'un équipement quelconque, par exemple d'un dispositif d'alarme ou de signalisation.

La passerelle de réseaux (18) est également connectée à une plateforme de services (112) via le lien (126) et à l'aide de protocoles de type IP. La plateforme de services (112) est par exemple de type passerelle WAP, OTA (« Over The Air » en langue anglaise, protocole standard de transmission et de réception pour les informations relatives à une application pour téléphones mobiles), IVR (« Interactive Voice Response » en anglais, réponse interactive par la voix) ou de type GPRS (par exemple MMSC, en anglais « Multi Media Messaging Service Center », centre de service multimédias). Cette plateforme (112) est également reliée au réseau de télécommunications (130) via le lien (147) et à l'aide de protocoles standards ou spécifiques, par exemple de type SS7 ou IP. La passerelle (18) est également reliée à un module (119) qui est de type SMSC (Centre de SMS en anglais), via le lien (134) et à l'aide de protocoles de type SMPP. Le module SMSC (119) est lui-même relié au réseau de télécommunications (130), via un lien (135), à l'aide de protocole de communications de type SS7.

De préférence, le Browser (16) est également relié au module SMSC (119) via le lien (137) et à l'aide de protocoles de type SMPP. Dans ce cas, les services USSD sont proposés aussi en tant que services SMS. Egalement des services USSD sont proposés en tant que services WAP, IVR, OTA, GPRS ou 3G/3G+.

Un module tierce (10) de traitement d'applications SMS traite des requêtes SMS et communique de manière classique avec le module SMSC (119) via le lien (102) et des protocoles de type SMPP.

Dans un mode particulier de mise en oeuvre du CENTRE USSD (14), des requêtes applicatives SMS du module (10) sont transmises via les liens (101) et (105) avec des protocoles de type SMPP et sont traitées directement par la passerelle d'accès USSD (17), permettant à ces services externes SMS d'être disponibles en USSD.

Aussi, d'autres services non-USSD existants tels que IVR, OTA, WAP, GPRS ou 3G/3G+ sont disponibles via USSD.

De manière générale, à l'aide de cette architecture, l'utilisateur accède aux services USSD via des services non-USSD existants ou nouveaux, et également, l'utilisateur accède à des services non-USSD, existants ou nouveaux, via USSD.

Le CENTRE USSD (14) est relié via un lien (123) qui est par exemple de type IP, à un ensemble (13) de réseaux de type IP au sein duquel sont contenus divers protocoles, reliés à des plateformes d'applications et de services (10), (11) (12) et (110). A travers cet ensemble de réseaux (13), le CENTRE USSD (14) a accès à des plateformes (12), par exemple de type VAS (« mobile Value-Added Services » en anglais, services mobiles à valeur ajoutée). Les données entre(13) et la plateforme (12) sont échangées via le lien (121) à l'aide de protocoles standards, tels que par exemple VXML/ HTTP (« HyperText Transfer Protocol » en anglais, protocole de transfert de texte), SOAP/HTTP (« Simple Object Access Protocol" en anglais, protocole standard destiné aux services WWW (« Word Wide Web » ou « WEB » en anglais, toile réseau mondiale), XML/ HTTP (« XLM » en anglais, eXtended Markup Language, langage de marquage étendu de description et d'analyse de données), SMPP, ou bien à l'aide de protocoles propriétaires tels que par exemple de type « ORACLE »® (serveur d'interface et d'applications pour chaîne mobile), « MySQL »® (base de données relationnelle), LDAP (« Lightweight Directory Access Protocol » en anglais, protocole simplifié pour accès à des bases de données), DIAMETER (extension IP pour mobile), RADIUS (extension IP pour mobile), MML (« Man-Machine Language » en anglais, langage homme-machine), ou autres types de protocoles.

Dans un mode de mise en oeuvre à travers le réseau (13), le CENTRE USSD (14) a accès à une plateforme (11), de type par exemple ASP (« Applications Services Providers » en anglais, fournisseurs d'applications et de services), ou de type MVNO (« Mobile Virtual Network Operator » en anglais, opérateurs de réseau mobile virtuel), ou d'autres tierces parties comme par exemple des banques, avec lesquelles à travers le réseau (13), le CENTRE USSD (14) échange des informations via un lien de type (121).

Dans mode particulier de réalisation, une partie de l'ensemble de réseaux (13) est reliée avec une ou plusieurs plateformes du réseau (130) via un lien (144) de type IP, tel que MML ou TELNET (« TELecommunication NETwork » en anglais, protocole de réseau permettant d'exécuter des commandes à distance). Cela est une manière efficace et pratique pour le CENTRE USSD, de proposer par navigation l'approvisionnement, la consultation et la modification des informations gérées dans le coeur d'un réseau (130) et par défaut inaccessibles aux utilisateurs.

Dans un mode de réalisation, le réseau (130) a accès à la plateforme de services (110) de type par exemple BSS (« Business Support Systems» en anglais, système de support d'affaires) via le lien (143) à l'aide de protocoles de type INAP, MAP, CAP et CDR (« Call Data Records » en anglais, enregistrement des données de l'appel). Le module BSS (110) est par exemple de type module de facturation post payé ou bien un module prépayé, par exemple de type IN (« Intelligent Network » en anglais, réseau intelligent, concept définissant des fonctions avancées pilotant des équipements du réseau téléphonique).

La plateforme (110) est également connectée via le lien (131) à l'aide de protocoles spécifiques ou propriétaires, à une passerelle (132), qui est par exemple de type USSD, dédiée à des modules de type BSS. La passerelle (132) communique avec le réseau (130) via un lien (141) et à l'aide de protocole USSD MAP et avec la passerelle USSD (17) via un lien (127) et à l'aide de protocole USSD MAP. Le lien (127) est dans ce cas confondu avec un lien quelconque de type (141). Cette connexion particulière donne la possibilité de configurer l'architecture de la figure 1 pour de nouveau services.

Dans un mode de réalisation particulier, la plateforme (110) échange des informations avec le réseau (13) via le lien (128), à l'aide de protocoles standards ou propriétaires, spécifiques à la plateforme (110), tels que par exemple « Ericsson »® UCIP (« User Communication Intégration Protocol » en anglais, protocole spécifique de « Ericsson »®), « Huawei »® MML, le protocole d'applications « Corba » pour NSN (« Nokia Siemens Network »®) BSS, Corba pour « Alcatel »® BSS, ou Corba pour « LHS »® BSS. Dans un autre mode de réalisation, la plateforme (110) est reliée directement à la passerelle de réseaux (18) via le lien (139), à l'aide de protocoles standards ou spécifiques.

L'architecture générique décrite dans cet exemple non limitatif, comprenant les modules et les liens illustrés en figure 1, présente un système dynamique et interactif pour l'accès et l'utilisation d'applications et de services multiples par les utilisateurs d'au moins un réseau de télécommunications (113). A l'aide de cette architecture, de nouveaux services sont proposés aux utilisateurs à travers d'interfaces classiques, tels que USSD, SMS, IVR, WAP, GPRS ou 3G/3G+. De plus, un accès USSD s'ouvre aux utilisateurs pour les services existants classiques, tels que SMS, IVR, WAP, GPRS ou 3G/3G+.

Egalement, des fonctionnalités classiques réseaux et d'usage difficile, telles que des transferts d'appel, des fonctions de Roaming (« Roaming » en anglais, itinérance inter réseaux), des numéros courts, des retours d'appel (« callback » en anglais) et autres, sont rendues pratiques et simples d'utilisation grâce au CENTRE USSD (14). De plus, des services temps réel sont proposés, tel que par exemple la différentiation d'un utilisateur en mode Roaming, et par exemple, une « customisation » en anglais, c'est-à-dire personnalisation et un profilage dynamiques appropriés. Avantageusement sont rajoutés des modules supplémentaires de type (10), (11), (12) ou (110), d'opérateurs de télécommunications ou de tierces parties.

De cette manière, l'architecture illustrée sur la figure 1, incluant le module (14), le réseau (13) et les modules (11), (12) et (110), présente des propriétés de scalabilité adaptée à la capacité de traitement de l'information en terme de données, d'applications, de services, de réseaux ou autres.

Le CENTRE USSD (14) gère les applications et les services en fonction des ressources du réseau et planifie l'acheminement de chaque tâche en fonction des bandes passantes disponibles ou des requêtes demandant des allocations de ressources supplémentaires.

Dans un mode de réalisation particulier, les opérateurs de télécommunications ont accès à cette architecture afin de tester fonctionnellement et en charge des systèmes externes.

Le CENTRE USSD (14) offre donc cette possibilité de connections et de tests de modules additionnels.

Avantageusement, toutes les connexions du CENTRE USSD (14) vers des systèmes externes sont établies en fonctions des pré-requis de sécurité de ces systèmes. Les échanges sont non sécurisés ou sécurisés à l'aide d'un cryptage, de type par exemple SSL (« Secure Socket Layer » en anglais, protocole qui permet de chiffrer les données envoyées par un navigateur, ou autre).

La présente invention est détaillée par la suite avec des exemples de réalisation préférés et non limitatifs.

Dans un mode préféré de mise en oeuvre, le Browser (16) est conçus sur la base de protocole USSD et un interpréteur de langage structuré VXML.

Un exemple de mise en oeuvre préféré du module Browser (16) est représenté sur la figure 2.

Ledit Browser (16) comprend au moins un interpréteur de langage structuré par objet (21). Dans cet exemple préféré de mise en oeuvre l'interpréteur (21) est de type VXML. L'interpréteur VXML (21) échange des informations avec un module (23) contenant des listes de services ou encore des menus USSD, via le lien (242) et à l'aide de protocoles de type VXML. Les menus USSD sont de type non structuré ou bien de type structuré. Au moins un service donné est décrit à l'aide d'appel de fichiers VXML (24) via le lien (246) et à l'aide d'un protocole VXML, afin de situer le contexte et les propriétés de la communication avec chacun des utilisateurs de téléphones mobiles. Dans ce cas, le Browser (16) est dit basé sur VXML.

De cette manière est effectuée la navigation à travers les menus de type USSD. Tous les services USSD du module (23) sont déployés dans le Browser en tant que fichiers VXML (par exemple VoiceXML v2), et téléchargés dans la mémoire de l'interpréteur VXML (21). Avantageusement, l'interpréteur VXML (21) est conçu de manière à prendre en considération les spécificités de la communication protocolaire USSD. Ledit interpréteur VXML (21) utilise des mémoires virtuelles (ou « caches ») internes pour les requêtes déjà interprétées et ainsi, toutes les requêtes interprétées pour la même séquence USSD, sont effectuées sans navigation, c'est-à-dire sans nouvelle interprétation de la structure arborescente déjà parcourue.

Dans un premier mode de mise en oeuvre préféré, ledit Browser (16) est configuré en tant que navigateur. La logique de navigation est similaire à celle d'une navigation WEB. Des interfaces de configuration désignent les listes et les sous-listes de tous les services et applications principaux existants, ces listes et sous-listes étant appelées respectivement pages et sous-pages ou bien menus et sous-menus.

Par exemple, des codes de service USSD sont générés et attribués aux menus. Dans une variante, des codes de services USSD sont attribués à tous les menus. Dans une autre variante, des codes de services sont attribués à une partie des menus.

De préférence, les menus (23) représentent au moins une page USSD, ces pages USSD étant liées par une logique de navigation. Les menus sont activés ou désactivés, par exemple par un administrateur interne (210) et leur état est signalé dans le CENTRE USSD (14) avec des messages de configuration, stockés dans la base de données et de profilage (19).

Le procédé de navigation, comprenant la génération, l'attribution et la gestion des menus, est délimité par plusieurs étapes :
- Allocation des codes des services USSD;
   Dans le cas où des codes de services USSD existant ne sont pas attribués d'avance, des codes USSD temporaires sont générés par l'administrateur interne (210).
- Création d'une logique des services, incluant une définition de noeuds et de sous-noeuds, une programmation des variables de marquage, une définition des URL distantes (« Uniform Resource Locator » en anglais, localisateur uniforme de ressource) ;
- Test, évaluation et mise en version des services ;
- Activation, déploiement et usage des services.

Le Browser (16) permet ainsi d'effectuer la navigation à partir d'un menu principal, dans des sous-menus à l'aide d'accès direct par une chaîne de caractères USSD, créant ainsi un « raccourci », qui inclut la séquence de réponse de l'utilisateur vers l'écran USSD à modifier.

Par exemple, une séquence simple USSD est le type : #123*1*2#

Le Browser (16) interprète chaque paramètre de la chaîne de caractères USSD de l'utilisateur de manière séquentielle et va par la suite afficher le menu approprié. Dans le cas où le menu est un dernier noeud, le Browser (16) va envoyer une requête de type par exemple HTTP au fournisseur de services, qui à son tour va par exemple, procurer le contenu souhaité.

A l'aide dudit Browser (16), des opérations dynamiques sont configurées et effectuées, telles que la navigation avec retour, la navigation à partir d'un menu initial, la navigation à partir d'un menu intermédiaire, l'interruption de la navigation. Avantageusement, ces opérations sont accompagnées par des fonctionnalités d'analyse, de configuration et de sauvegarde du profil de l'utilisateur. Sous le terme « profil de l'utilisateur » est entendu l'ensemble des caractéristiques relatives à au moins une connexion et à au moins une session, par exemple : adresse IP, numéro de téléphone, localisation, heure et date de la connexion, durée de la connexion, langue de la connexion et de la navigation, position géographique, types d'applications et de services requis, contenus sollicités et tout autre caractéristique relative à cette connexion.

De préférence, le CENTRE USSD (14) contient une configuration des menus multilingues pour toute la chaîne de bout en bout (entre les abonnés finaux et les fournisseurs de services par exemple). Aussi, la logique des services est indépendante des langues pour toute la chaîne de bout en bout.

Le Browser (16), ainsi conçu est configuré pour une architecture réseau avec des connexions, qui est multiple, dynamique, et interactive. Ce Browser (16) contient des connecteurs internes, c'est-à-dire des interfaces de communication avec les passerelles (15), (17) et (18), ces connecteurs internes pouvant inclure au moins un sous-connecteur. En utilisant le connecteur (22), le Browser (16) communique avec la passerelle d'intégration (15) via un lien (124). Le Browser (16) est également relié à la passerelle d'accès USSD (17) via le connecteur USSD (25) et un lien (125). Aussi, le Browser (16) communique avec la passerelle de réseaux (18) via le connecteur (26) et un lien (129). Dans un mode de réalisation particulier, la passerelle de réseaux (18) est reliée à la plateforme (112) via un lien de type (126), plus précisément avec des modules de type IVR (282), WAP (283) et WEB (284). De cette manière, les services de type IVR, WAP ou WEB sont proposés via des protocoles USSD. En général, tout service numérique et toute application existante ou nouvelle pour des systèmes en réseaux est mis(e) en place par des protocoles USSD.

Dans un autre mode de réalisation particulier, la passerelle de réseaux (18) est reliée avec la plateforme de services SMSC (119) via le lien (134). La passerelle d'intégration (15) échange des données avec la plateforme BSS (110) via le lien (222) qui est une composition de lien (123), de réseau (13) et de lien (128). Egalement la passerelle de réseaux (18) échange des données avec ladite plateforme BSS (110) via le lien (139). Dans une première variante, le module (110) est relié uniquement au module (15). Dans une deuxième variante, le module (110) est relié uniquement au module (18). Dans une troisième variante, le module (110) est relié au module (15) et au module (18).

La base de données et de profilage (19), comprenant un module de définition d'au moins un profil d'utilisateur et d'au moins un profil de service, échange des informations séparément avec le module (15) via le lien (292), avec le module (16) via le lien (191), avec le module (17) via le lien (293) et avec le module (18) via le lien (294). De cette manière, des informations de configuration, des différentes données d'administration, des statistiques et des informations sur les profils des utilisateurs et des services sont complétées, utilisées et inter-changées entre les modules (15), (16), (17) et (18).

Dans un exemple de réalisation particulier, la base de données et de profilage (19) est connectée uniquement avec le Browser (16) via le lien (191), dans ce cas les liens (292), (293) et (294) sont omis. De préférences, la base de données et de profilage (19) contient des informations sur les caractéristiques de sessions et des statistiques statiques et dynamiques.

Dans un deuxième mode de mise en oeuvre préféré, le Browser (16) est configuré en tant que plateforme de type « Hosting » en anglais, ou hébergement d'applications et de services extérieurs ou de tierces parties. Les tierces parties accèdent de manière sécurisée à la fonctionnalité de création et l'activation d'applications et de services. Ces tierces parties sont alors en possession uniquement des codes des services qu'ils proposent.

Le mode de mise en oeuvre d'hébergement dans la présente invention permet aux opérateurs de télécommunications de mettre en place des services USSD gérés par des tierces parties, comme par exemple des fournisseurs de services. L'accès des tierces parties est entièrement sécurisé. Les opérateurs de télécommunications créent un ou plusieurs comptes pour chaque tierce partie en attribuant au moins un code d'accès et des ressources USSD. Chaque fournisseur de services utilise la même interface utilisateur que l'opérateur de télécommunications et opère à distance sa propre application USSD, dans les limites d'exploitation attribués par l'opérateur de télécommunications. Pour chaque fournisseur de services, un historique des activités et des opérations est enregistré. De plus, cet environnement de création de services et d'applications est fourni non seulement aux fournisseurs de services, mais aussi aux utilisateurs divers et aux abonnés, qui de cette manière adaptent et customisent leurs propres applications, services et contenus.

Dans un troisième mode de mise en oeuvre préféré, le CENTRE USSD (14) est configuré en tant que « Proxy » USSD (module d'un système USSD connecté à un autre système USSD et effectuant des requêtes (et leur sauvegarde) pour des besoins de services). Cette mise en oeuvre concernant par exemple le module (110) est réalisée via la passerelle spécifique (132). Le lien traditionnel (141) connectant la passerelle (132) au réseau (130) et alors confondu par le module (110) avec le lien (127) connectant la passerelle (132) à la passerelle USSD (17). Les applications et services du module (110) sont alors appropriés par le CENTRE USSD (14).

De cette manière, devient possible le regroupement de plusieurs codes d'accès USSD en un seul code d'accès et aussi la mise en place de nouveaux services (USSD ou non) par l'opérateur, qui sont irréalisables sans modifications des éléments existants du réseau.

Dans un quatrième mode de mise en oeuvre préféré, le CENTRE USSD (14) est configuré en tant que plateforme de routage active, qui procure une médiation de type USSD entre différents éléments du réseau et résout des problèmes liés au routage des utilisateurs, des services et des applications. Ces problèmes sont par exemple le routage de l'utilisateur vers une plate-forme BSS (110), le routage de type MNP (« Mobile Number Portability » en anglais, portabilité du numéro de mobile) et autres. Lorsque le CENTRE USSD (14) remplit des fonctions de Proxy et de routeur, il a la capacité d'effectuer des modifications statiques ou/et dynamiques des paramètres commutés.

Lorsque le CENTRE USSD (14) remplit des fonctions de Proxy et de routeur il a la capacité d'effectuer des fonctions de partage de charge.

Dans un cinquième mode de mise en oeuvre préféré, le CENTRE USSD (14) est configuré pour effectuer de la diffusion de type Broadcast de données et de services vers une multitude d'utilisateurs, comme par exemple de diffuser des publicités, des alertes ou des informations utiles. Dans une variante, la diffusion Broadcast est suivie d'une réponse de l'utilisateur et d'un échange interactif, par exemple pour des applications telles que des enquêtes de consommation et des sondages.

De plus, un environnement de création de services Broadcast permet aux fournisseurs de services et à l'utilisateur final, d'adapter et de customiser leurs propres diffusions Broadcast.

Avantageusement l'environnement Broadcast du CENTRE USSD (14), permet aux opérateurs de lancer aussi des services Broadcast classiques, tels que SMS, IVR, WAP, GPRS ou 3G/3G+.

Dans un exemple de réalisation dudit CENTRE USSD (14), le Browser (16) communique via le lien (278) avec un module (27) de facturation. De cette manière les contenus sollicités par ce même utilisateur final sont généralement soumis à un contrôle et à une facturation, en temps réel ou différé.

Dans un autre exemple de réalisation dudit CENTRE USSD (14), le Browser (16) communique via le lien (288) avec un module (28) de tarification. Ces deux exemple de réalisation sont appliqués pour tout type d'utilisateurs : avec abonnement, en mode prépayé, itinérant, fixes ou nomades.

Le CENTRE USSD (14) gère par exemple la facturation par abonnement ou en mode prépayé, en utilisant une approche dite procédure de payement externe. Une procédure spécifique de facturation externe est spécifiée dans la logique des services USSD pendant la création du service et est déclenchée en temps réel durant la session de l'utilisateur. Les procédures de payement sont en conformité avec les procédures spécifiques de payement d'un opérateur ou d'une tierce partie.

Pendant la session, un utilisateur itinérant est également identifié, de manière à ce que sa navigation soit prise en compte de manière appropriée pendant la procédure de payement. Avantageusement, ce cas de figure est disponible à l'aide de l'utilisation des fonctionnalités du CENTRE USSD (14) .

De manière générale, le CENTRE USSD (14) comprend un système de payement qui effectue la tarification ou/et la facturation en temps réel ou différé, et permet de cette façon la convergence des différents services et types de payement (prépayés, avec abonnements et mixtes).

Dans un mode particulier de réalisation, les utilisateurs souscrivent à un service quelconque à l'aide du CENTRE USSD (14). De préférence, le CENTRE USSD (14) comprend une fonctionnalité de modification ou d'annulation automatique de la souscription, ou bien à la demande de l'utilisateur ou bien à celle du fournisseur de services.

Dans un mode de mise en oeuvre particulier dudit CENTRE USSD (14), le Browser (16) communique via le lien (298) avec un module (29), pour lequel un procédé d'observation et de classement est défini. De préférence, ledit procédé d'observation et de classement effectue l'observation, l'analyse et le classement du comportement des utilisateurs, des contenus, des services, des fournisseurs et d'autres utilisateurs, et cela en temps réel ou différé. Ce procédé est utilisé par exemple pour l'analyse et le classement de la sollicitation des services et de leurs sous-parties, ainsi que pour la génération de revenus.

Les paramètres d'observation et de classement sont définis pendant ou après le processus de création du service.

Durant la session, une administration (210) de gestion réseau interne au CENTRE USSD (14) génère en temps réel les paramètres demandés et crée automatiquement un événement d'observation ou/et de classement.

Dans un mode de mise en oeuvre, le module de facturation (27), le module de tarification (28) et le module d'observation et de classement (29) sont intégrés à l'intérieur du module Browser (16).

L'administration interne de gestion (210) du CENTRE USSD (14) est reliée avec le Browser (16) et donc avec l'interpréteur VXML (21) via un lien (211). Le module (210) est capable de supporter en même temps tous les services déployés comprenant des opérations USSD génériques initiées par le réseau de télécommunications et par le terminal mobile, ainsi que des sessions ou dialogues d'une session USSD bilatérale. L'observation et le classement sont applicables au fournisseur de services, ainsi qu'à l'utilisateur. L'observation est basée sur des critères paramétriques définis, tels que par exemple : le type d'événement, la date et l'heure de l'événement, la durée de la session, le nombre d'échanges pendant la session, le code application du service (utilisateur final ou réseau quelconque), le fournisseur VAS, le contenu du message (basé sur des mots-clés ou des codes de contenu), la localisation de l'utilisateur final. Egalement, une combinaison des facteurs d'observation est corrélée avec des phénomènes événementiels, tels que par exemple des vacances, des championnats sportifs, des campagnes de publicités.

Dans sa définition la plus générale, le module d'administration (210) comprend une administration système de type WEB incluant un environnement de création de services, de test, de déploiement et de gestion de versions de ces services, un module de contrôle du système CENTRE USSD (14) et des modules de configurations des fonctionnalités, des paramètres et des passerelles réseaux. Ledit environnement de création est accessible localement, à distance ou depuis un terminal par l'opérateur et/ou les tierces parties et/ou les utilisateurs eux-mêmes. L'administration système effectue la régulation des connexions, la collecte et l'analyse des données et des statistiques. Le module d'administration système (210) est relié avec au moins un autre module interne au CENTRE USSD (14), autre que le Browser (16). L'administration système est par exemple reliée avec la passerelle d'intégration (15) via un lien (212), avec la passerelle USSD (17) via un lien (214), avec la passerelle de réseau (18) via un lien (215) et avec la base de données et de profilage (19) via un lien (213).

Grâce à la base de données et de profilage (19), le CENTRE USSD (14) a la possibilité de déterminer en temps réel le profil d'un utilisateur ou d'un groupe d'utilisateurs. Le profil de l'utilisateur est complété par son profil d'usage relatif à au moins un service et à l'ensemble des paramètres propres aux sessions vers ce service.

Grâce à la base de données et de profilage (19), le CENTRE USSD (14) a la possibilité de déterminer en temps réel le profil d'un service ou d'un ensemble de services. Ce profil est constitué d'informations telles que par exemple l'accessibilité réduite pour des services gratuits ou pour un groupe particulier d'utilisateurs, la définition de listes blanches et noires, ou autres.

En fonction du comportement détecté de l'utilisateur, le CENTRE USSD (14) a la capacité de déclencher un événement d'assistance mettant en place un auto-apprentissage. Ainsi le CENTRE USSD (14) fournit en temps réel une assistance adaptée à l'utilisateur lorsqu'une telle est nécessaire.

Dans une variante, le CENTRE USSD propose une gestion de services et de contenus effectuée directement par les utilisateurs. Par exemple, les services et les contenus sont crées ou personnalisés par l'utilisateur lui-même à l'aide d'un site WEB ou bien directement à l'aide du terminal mobile.

De préférence, le système USSD de navigation et d'hébergement génère des fichiers CDR. Une fois créés, des fichiers par exemple de facturation sont à la disponibilité de l'opérateur de télécommunications ou des fournisseurs de services. La fréquence de mise à jour de ces fichiers est par exemple, au moins une fois par minute. Leur format est par exemple de type « ASN.1 Structured » («Abstract Syntax Notation One Structured» en anglais, manière standard de description d'un message envoyé ou reçu par le réseau).

Dans un mode particulier de mise en oeuvre, la syntaxe des fichiers CDR est adaptée par l'opérateur de télécommunications et certains paramètres sont modifiés. Les différents formats CDR sont générés à l'aide de paramètres prédéfinis. Pour chaque noeud dans l'arborescence de la logique du service le choix de formats CDR et de leurs usages par un administrateur sont flexibles. Ledit administrateur est dans ce cas un opérateur, un fournisseur de services ou toute tierce partie à laquelle l'administration du service a été déléguée.

La figure 3 illustre un exemple non limitatif de réalisation de l'architecture en référence à la figure 1 et à la figure 2 avec des connecteurs externes au module Browser (16). Le module Browser (16) est représenté en architecture avec le module passerelle d'intégration (15), qui contient au moins un module d'interface d'intégration. Avantageusement, les modules d'interface sont basés par exemple sur les protocoles HTTP (321), SOAP (322), XML/HTTP (323), CORBA (324), « ORACLE »® (325), « MySQL »® (326), LDAP (327), SMPP (328), CIMD2 (329) (« Computer Interface to Message Distribution, version 2 » en anglais, interface de distribution de messages), Diameter (3210), ou passerelle d'intégration quelconque (3211). Dans le module passerelle d'intégration (15), les interfaces d'intégration sont de type client, serveur, client-serveur ou bien « Peer to Peer » en anglais, communication point à point.

Aussi, le module (15) est relié via un lien de type (123) et à l'aide de protocole IP, à un module (31) comprenant un ensemble de services, par exemple des services VAS. Le module (31) comprend par exemple, le module (11) qui contient un module MVNO (312) et un module ASP (311), et le module (12) qui est composé d'un module VAS (313) et d'un module SMSC (314). Le module (15) communique avec les modules (11) et (12) via un lien de type (123), suivi d'un lien de type (121).

Le module 31 comprend également une plateforme de services de type BSS ou IN (110), avec laquelle le module (15) communique avec un lien de type (128). Aussi, le module (31) comprend une plateforme d'applications SMS (10), avec laquelle le module (15) communique via un lien (123), suivi d'un lien (101). Afin d'accéder aux multiples réseaux informatiques et de télécommunications, le module Browser (16) est relié au module passerelle réseaux (18) via un lien de type (129). Le module (18) contient au moins une passerelle réseaux de type par exemple SOAP (331), HTTP (332), SMPP (333), CAMEL (335), MAP (336) ou passerelle réseau quelconque (337). Dans le module passerelle réseaux (18), les interfaces de réseaux sont de type client, serveur, client-serveur ou bien « Peer to Peer » en anglais, communication point à point.

Le module (18) a accès aux réseaux, par exemple via un lien (35) qui est par exemple de type (133) et/ou de type (126) et/ou de type (134), et/ou via un lien (37) qui est par exemple (127) et/ou (122).

Grâce à l'architecture particulière et non limitative illustrée à la figure 3 de la présente invention, le CENTRE USSD (14) générique présente des caractéristiques de multi-applications et de multiservices, de compatibilité et d'interopérabilité avec des systèmes existants, de scalabilité en termes de capacités de réseaux et de connexions et donc, en termes d'applications et de services.

Le CENTRE USSD (14) est une plateforme ouverte et adaptée aux standards existants, avec des capacités multiservices et multi opérateurs. Le CENTRE USSD (14) permet le déploiement de services nouveaux, en donnant des opportunités pour de multiples applications mobiles. L'interaction de l'utilisateur avec des applications mobiles et facile et instantanée, le temps de réponse est garanti et les interactions pendant la session sont supportées, à la différence des services tels que SMS et GPRS. Le protocole USSD est entièrement supporté par le réseau GSM et l'addition du CENTRE USSD (14) dans un réseau de télécommunications ne demande pas la modification du réseau. Le CENTRE USSD (14) supporte des sessions initiées par l'utilisateur (115) de type « pull » (« pull » en anglais, retrait) et des sessions initiées par le serveur d'applications (16) de type « push » (du mot « push » en anglais, pousser), avec une interactivité unilatérale ou bilatérale.

A l'aide d'une simple reconfiguration, des applications pour mobiles telles que SMS, STK (« Sim Tools Kit » en anglais, boîte à outils pour carte SIM), WAP, IVR et autres, sont disponibles immédiatement.

Le fait que la passerelle USSD (17) et le Browser USSD (16) sont des plateformes ouvertes, rend possible l'intégration de différents protocoles réseaux et les déploiements multiples avec des capacités de plusieurs milliers de transactions par seconde.

Par exemple, ledit CENTRE USSD (14) est utilisé pour des services et applications bancaires, pour la diffusion Broadcast, par exemples de publicités, d'alertes, de la simulation de trafic ou des services réseau diverses. Egalement, le CENTRE USSD (14) est utilisé pour la gestion de contenu par géo localisation, ainsi que pour la multitude d'applications émergentes des SP (« Services Provider » en anglais, fournisseurs de services).

Les opérateurs de télécommunications ont accès à ce CENTRE USSD pour tester fonctionnellement et en charge des systèmes externes.

Des modules complémentaires sont intégrés, tels que des modules comprenant une fonction de surveillance ou de sécurité, ou tout autre dispositif fixe ou mobile pouvant communiquer avec au moins un réseau de télécommunications. Un exemple de réalisation particulier et non limitatif du module CENTRE USSD (14) est effectué à l'aide de plateformes matérielles de type HP (« Hewlett Packard »®), FSC (« Fujitsu-Siemens Computers »®), IBM (« International Business Machines »®) ou « SUN Microsystems »®. Le système opérationnel est par exemple de type « Red Hat Enterprise »® ou « Fedora Linux »®, ou de type « Sun Solaris »®.

## Revendications

1. Système numérique de télécommunications pour la création, l'implémentation, l'intégration et le déploiement d'applications et de services numériques, ledit système (14) étant une plateforme d'applications et de services (14), appelée CENTRE USSD (14) :
- située au sein d'un serveur dans un réseau de télécommunications mobiles,
- adaptée à effectuer la création, l'implémentation, l'intégration et le déploiement de services non-vocaux de type USSD,
et comprenant au moins :
- un module serveur d'applications et de services (16), appelé Browser (16), comprenant au moins un interpréteur VXML (21), adapté à échanger des informations avec au moins un module de services USSD (23) contenant des listes de services non-vocaux de type USSD, ledit module de services USSD (23) étant adapté à appeler, à partir d'au moins un module de fichiers VXML (24) et à l'aide du protocole VXML, au moins un fichier VXML décrivant au moins un service non-vocal de type USSD, lesdits services non-vocaux de type USSD dudit module de services USSD (23) étant déployés dans ledit Browser (16) en tant que fichiers VXML,
- un module passerelle d'accès USSD (17), adapté à communiquer avec ledit Browser (16) et à échanger des données avec un coeur de réseau SS7 (130) à l'aide d'un protocole MAP,
- un module passerelle de réseaux (18), adapté à communiquer avec ledit Browser (16) et à échanger des données avec ledit coeur de réseau (130) à l'aide d'un protocole SS7,
- un module passerelle d'intégration (15), adapté à communiquer avec ledit Browser (16) et à communiquer avec un réseau IP (13) à l'aide d'un protocole IP,
- un module base de données et de profilage (19), adapté à communiquer avec ledit Browser (16) et contenant des informations sur des profils d'utilisateurs et de services, et
- un module d'administration (210) de gestion interne comprenant une administration système de type WEB incluant un environnement de création de services, de test, de déploiement et de gestion de versions de ces services, un module de contrôle dudit CENTRE USSD (14) et des modules de configurations des fonctionnalités, des paramètres et des passerelles réseaux.

2. Système selon la revendication 1, **caractérisé en ce que** ledit module passerelle d'accès USSD (17) est adapté à communiquer avec ledit Browser (16) à l'aide d'un protocole SMPP.

3. Système selon l'une des revendications 1 et 2, **caractérisé en ce qu'**il est adapté à être connecté à moins un module de type SMSC (119).

4. Système selon l'une quelconque des revendications 1 à 3, **caractérisé en ce qu'**il est adapté à être connecté à au moins une plateforme de services (112) de type module WAP et/ou OTA et/ou IVR et/ou GPRS pour un réseau quelconque de télécommunications.

5. Système selon l'une quelconque des revendications précédentes, **caractérisé en ce qu'**il est adapté à être connecté à au moins un module de type applications SMS (10).

6. Système selon l'une quelconque des revendications précédentes, **caractérisé en ce qu'**il est adapté à être connecté à au moins un ensemble de réseaux IP (13) contenant des protocoles de communication et des interfaces standards ou propriétaires.

7. Système selon l'une quelconque des revendications précédentes, **caractérisé en ce qu'**il est adapté à être relié à travers ledit ensemble de réseau IP (13) à au moins un module (11) de services d'opérateurs de télécommunications ou de tierces parties et/ou à au moins un module (12) de services mobiles à valeur ajoutée.

8. Système selon l'une quelconque des revendications précédentes, **caractérisé en ce qu'**il est adapté à être relié à au moins un module (110) de systèmes dits réseaux intelligents et de support d'affaires.

9. Système selon l'une quelconque des revendications précédentes, **caractérisé en ce qu'**au moins un module serveur d'applications et de services (16) ou au moins un module passerelle d'accès USSD (17) ou au moins un module passerelle de réseaux (18) ou au moins un module passerelle d'intégration (15) ou au moins un module base de données et de profilage (19) est autosuffisant.

10. Système selon l'une quelconque des revendications précédentes, **caractérisé en ce qu'**il est un système d'hébergement d'applications et de services de tierces parties.

11. Système selon l'une quelconque des revendications précédentes, **caractérisé en ce qu'**il est un système de type routeur.

## Patentansprüche

1. Ein digitales Telekommunikationssystem für die Erstellung, Implementierung, Integration und Bereitstellung digitaler Anwendungen und Dienste, wobei es sich bei diesem System (14) um eine Anwendungs- und Dienstplattform (14, USSD-CENTER (14) genannt) handelt, die:
- sich auf einem Server in einem mobilen Telekommunikationsnetz befindet,
- für die Erstellung, Implementierung, Integration und Bereitstellung von Non-Voice-Diensten wie USSD geeignet ist
und mindestens aus Folgendem besteht:
- einem Anwendungs- und Dienste-Servermodul (16), Browser (16) genannt, das mindestens einen VXML-Interpreter (21) enthält und für den Informationsaustausch mit mindestens einem USSD-Dienstmodul (23), bestehend aus Listen von Non-Voice-Diensten wie USSD, geeignet ist, wobei das besagte USSD-Dienstmodul (23) dafür geeignet ist, durch die Nutzung des VXML-Protokolls von mindestens einem VXML-Dateienmodul (24) mindestens eine VXML-Datei abzurufen, die mindestens einen Non-Voice-Dienst wie USSD beschreibt, wobei die besagten Non-Voice-Dienste wie USSD des besagten USSD-Dienstmoduls (23) im besagten Browser (16) als VXML-Dateien bereitgestellt werden,
- einem USSD-Access-Gateway-Modul (17), das dafür geeignet ist, durch die Nutzung eines MAP-Protokolls mit dem besagten Browser (16) zu kommunizieren und Daten mit einem SS7-Kernnetz (130) auszutauschen,
- einem Netzwerkgatewaymodul (18), das dafür geeignet ist, durch die Nutzung eines SS7-Protokolls mit dem besagten Browser (16) zu kommunizieren und Daten mit dem besagten Kernbereich (130) auszutauschen,
- einem Integrationsgatewaymodul (15), das dafür geeignet ist, durch die Nutzung eines IP-Protokolls mit dem besagten Browser (16) und mit einem IP-Netzwerk (13) zu kommunizieren,
- einem Datenbank- und Profiling-Modul (19), das dafür geeignet ist, mit dem besagten Browser (16) zu kommunizieren und das Informationen über die Profile von Benutzern und Diensten enthält
und
- einem internen Management-Administrationsmodul (210), das aus einer WEB-Administration besteht, die eine Umgebung für die Erstellung von Diensten sowie für die Prüfung, die Bereitstellung und das Versionsmanagement dieser Dienste, ein Steuermodul des besagten USSD-CENTERS (14) und Module für die Konfigurationen der Funktionalitäten, Parameter und Netzwerkgateways enthält.

2. Ein System, das dem Anspruch 1 entspricht und sich dadurch auszeichnet, dass das besagte USSD-Access-Gateway-Modul (17) durch die Nutzung eines SMPP-Protokolls für die Kommunikation mit dem besagten Browser (16) geeignet ist.

3. Ein System, das einem der Ansprüche 1 und 2 entspricht und sich dadurch auszeichnet, dass es für die Verbindung mit mindestens einem Modul des Typs SMSC (119) geeignet ist.

4. Ein System, das einem der Ansprüche 1 bis 3 entspricht und sich dadurch auszeichnet, dass es für die Verbindung mit mindestens einer Diensteplattform (112) wie einem WAP-Modul und/oder OTA und/oder IVR und/oder GPRS für ein Telekommunikationsnetz geeignet ist.

5. Ein System, das einem der vorhergehenden Ansprüche entspricht und sich dadurch auszeichnet, dass es für die Verbindung mit mindestens einem SMS-Anwendungsmodul (10) geeignet ist.

6. Ein System, das einem der vorhergehenden Ansprüche entspricht und sich dadurch auszeichnet, dass es für die Verbindung mit mindestens einem Satz von IP-Netzwerken (13) geeignet ist, die Kommunikationsprotokolle und Standardschnittstellen oder proprietäre Schnittstellen enthalten.

7. Ein System, das einem der vorhergehenden Ansprüche entspricht und sich dadurch auszeichnet, dass es für die Verbindung mit mindestens einem Telekommunikationsbetreiberdienste- oder Drittanbieter-Modul (11) und/oder mit mindestens einem Modul (12) mobiler Mehrwertdienste über den besagten Satz von IP-Netzwerken (13) geeignet ist.

8. Ein System, das einem der vorhergehenden Ansprüche entspricht und sich dadurch auszeichnet, dass es für die Verbindung mit mindestens einem Modul (110) der Systeme, die intelligente Netzwerke genannt werden, und Business Support geeignet ist.

9. Ein System, das einem der vorhergehenden Ansprüche entspricht und sich dadurch auszeichnet, dass mindestens ein Server für das Anwendungs- und Dienste-Servermodul (16) oder mindestens ein Access-Gateway-Modul (17) oder mindestens ein Netzwerkgatewaymodul (18) oder mindestens ein Integrationsgatewaymodul (15) oder mindestens ein Datenbank- und Profiling-Modul (19) eigenständig ist.

10. Ein System, das einem der vorhergehenden Ansprüche entspricht und sich dadurch auszeichnet, dass es sich um ein Hosting-System für Anwendungen und Dienste von Drittanbietern handelt.

11. Ein System, das einem der vorhergehenden Ansprüche entspricht und sich dadurch auszeichnet, dass es sich um ein Routersystem handelt.

## Claims

1. A digital telecommunications system for creation, implementation, integration and deployment of digital applications and services, said system (14) being an applications and services platform (14, called USSD CENTER (14) :
- located within a server in a mobile telecommunications network,
- adapted to perform creation, implementation, integration and deployment of non-voice services such as USSD,
and comprising at least:
- an applications and services server module (16), called Browser (16), comprising at least one VXML interpreter (21), adapted to exchange information with at least one USSD services module (23) comprising non-voice lists of services such as USSD, said USSD services module (23) being adapted to call, from at least one VXML files module (24) and by using VXML protocol, at least one VXML file describing at least one non-voice service such as USSD, said non-voice services such as USSD of said USSD services module (23) being deployed in said Browser (16) as VXML files,
- an USSD access gateway module (17) adapted to communicate with said Browser (16) and to exchange data with a SS7 core network (130) by using a MAP protocol,
- a network gateway module (18), adapted to communicate with said Browser (16) and to exchange data with said network core (130) by using a SS7 protocol,
- an integration gateway module (15), adapted to communicate with said Browser (16) and to communicate with an IP network (13) by using an IP protocol,
- a database and profiling module (19) adapted to communicate with said Browser (16) and comprising information on users and services profiles,
and
- an internal management administration module (210) comprising a WEB system administration comprising an environment for services creation, for testing, deployment and versions management of these services, a control module of said USSD CENTER (14) and modules for configurations of the functionalities, parameters and network gateways.

2. A system according to claim 1, **characterized in that** said USSD access gateway module (17) is adapted to communicate with said Browser (16) by using a SMPP protocol.

3. A system according to one of the claims 1 and 2, **characterized in that** it is adapted to be connected to at least one SMSC type module (119).

4. A system according to any one of the claims 1 to 3, **characterized in that** it is adapted to be connected to at least one services platform (112) such as WAP module and/or OTA and/or IVR and/or GPRS for any telecommunications network.

5. A system according to any one of the preceding claims, **characterized in that** it is adapted to be connected to at least one SMS applications module (10).

6. A system according to any one of the preceding claims, **characterized in that** it is adapted to be connected to at least one set of IP networks (13) comprising communication protocols and standard or proprietary interfaces.

7. A system according to any one of the preceding claims, **characterized in that** it is adapted to be connected through said set of IP network (13) to at least one module (11) of telecommunications operators services or of third parties and/or to at least one module (12) of mobile value added services.

8. A system according to any one of the preceding claims, **characterized in that** it is adapted to be connected to at least one module (110) of systems said intelligent networks and of business support.

9. A system according to any one of the preceding claims, **characterized in that** at least one server for applications and services module (16) or at least one access gateway module (17) or at least one network gateway module (18) or at least one integration gateway module (15) or at least one database and profiling module (19)is self-sufficient.

10. A system according to any one of the preceding claims, **characterized in that** it is a hosting system for applications and third parties services.

11. A system according to any one of the preceding claims, **characterized in that** it is a router system.
